# EUROPEAN PATENT APPLICATION

(11) **EP 3 763 963 A1**
(43) Date of publication of application: **13.01.2021**
(21) Application number: 19461556.3
(22) Date of filing: 12.07.2019
(51) Int. Cl.: F16D 65/54, F16D 55/40, F16D 65/18

(54) **BRAKE ACTUATOR**

(71) Applicant: Goodrich Corporation, Charlotte, NC 28217 (US)
(72) Inventor: KIELCZYKOWSKI, Przemyslaw, 55-093 Kielczów (PL); KIELCZYKOWSKI, Piotr, 56-300 Milicz (PL)
(74) Representative: Dehns

(57) **Abstract**

A brake actuator (2) for an aircraft braking system comprises a housing (4) having an internal bore (16), a sleeve (12) mounted for axial movement within the bore (16) of the housing (4), the sleeve (12) having a plurality of ratchet teeth (13) on an external surface (15) thereof, a latching mechanism (14) comprising at least one latch (70) mounted for radial movement for engagement with the ratchet teeth (13) of the sleeve (12), the latching mechanism (14) further comprising a latch spring (92) mounted externally of the internal bore (16) for biasing the at least one latch (70) radially inwardly to engage with the ratchet teeth (13) of the sleeve (12), and a hydraulic brake piston (10) slidably mounted within the internal bore (16) of the housing (4) and extending axially through the sleeve (12), the piston (10) having a piston head (18) at a first end (20) thereof, and a second opposite end (38) for operative engagement with a brake element (100), the piston (10) being mounted so as to be movable axially relative to the sleeve (12) between a first position in which the piston (10) is drivingly engaged with the sleeve (12) for urging the sleeve (12) in a first direction (A) along the internal bore (16) of the housing (4), and a second position in which the piston (10) is drivingly disengaged from the sleeve (12), the latching mechanism (14) preventing movement of the sleeve (12) along the internal bore (16) of the housing (4) in a second direction (B) opposite to the first direction (A).

## Description

### TECHNICAL FIELD

The present disclosure relates to a brake actuator for use, for example, in the braking system for an aircraft wheel.

### BACKGROUND

Braking systems for aircraft wheels typically comprise a stack of alternating static and rotary brake discs. One or more brake actuators are mounted to a static structure at an end of the brake disc stack and are operated to apply a force to the disc stack to bring the static and rotary brake discs into frictional contact, thus applying a braking force to the wheel. The actuator typically comprises a piston slidably mounted in a housing. Hydraulic fluid is admitted into the housing to urge the piston towards the brake disc stack. A spring returns the piston to its original position when the force from the hydraulic fluid is no longer applied so as to ensure that the piston is properly disengaged from the brake discs.

With time, the brake discs wear down meaning that the travel required of the piston increases, leading to reduced responsiveness in the braking system.

It is therefore desirable to provide an actuator which compensates for this wear and which provides consistent travel of the piston as the brake discs wear down.

### SUMMARY

According to one embodiment of the present disclosure, there is provided a brake actuator for an aircraft braking system, the brake actuator comprising a housing having an internal bore, a sleeve mounted for axial movement within the bore of the housing, the sleeve having a plurality of ratchet teeth on an external surface thereof, a latching mechanism comprising at least one latch mounted for radial movement for engagement with the ratchet teeth of the sleeve, the latching mechanism further comprising a latch spring mounted externally of the internal bore for biasing the at least one latch radially inwardly to engage with the ratchet teeth of the sleeve, and a hydraulic brake piston slidably mounted within the internal bore of the housing and extending axially through the sleeve, the piston having a piston head at a first end thereof, and a second opposite end for operative engagement with a brake element, the piston being mounted so as to be movable axially relative to the sleeve between a first position in which the piston is drivingly engaged with the sleeve for urging the sleeve in a first direction along the internal bore of the housing, and a second position in which the piston is drivingly disengaged from the sleeve, the latching mechanism preventing movement of the sleeve along the internal bore of the housing in a second direction opposite to the first direction.

The latching mechanism may comprise a wedge. The latch spring may be configured to bias the wedge into contact with the at least one latch so as to bias the latch radially inwardly.

The at least one latch may comprise an angled surface at a radially outer end thereof for engaging an angled surface of the wedge. The wedge may be arranged axially between the latch spring and the at least one latch.

The wedge may be a wedge ring which circumscribes the housing.

The at least one latch may be slidably received in an opening through a wall of the housing. The opening may be configured to guide the at least one latch radially, and the radially outer end of the at least one latch may project radially outwardly of the opening for engagement with the wedge.

The latch spring may be a compression spring received on a radially outer surface of the housing.

The latch spring may be retained between a radially extending external shoulder of the housing and a retainer. The retainer may be a nut.

The brake actuator may further comprise a cover extending axially over the latching mechanism. The cover may be attached to the retainer.

The cover may extend to and/or overlap a latch spring support arranged between the latch spring and the radially extending shoulder of the housing.

The brake actuator may comprise a plurality of latches. The plurality of latches may be circumferentially equi-spaced around the housing.

The brake actuator may comprise an annular wiper mounted at one end of the internal bore of the housing for engaging the external surface of the sleeve.

The brake actuator may comprise a resilient lip for engagement with the ratchet teeth of the sleeve for preventing ingress of contaminants into the internal bore of the housing.

The piston and sleeve may be configured such that in the second position of the piston relative to the sleeve, the piston engages the sleeve thereby providing a hard stop for the piston.

According to another embodiment of the present disclosure, there is provided a brake actuator comprising a housing having an internal bore, a sleeve slidably received within the housing, the sleeve having external ratchet teeth for engaging with a latching mechanism, and a hydraulic brake piston slidably mounted within the internal bore of the housing and extending axially through the sleeve, the piston having a piston head at a first end thereof, and a second opposite end for operative engagement with a brake element, the piston being mounted so as to be movable axially relative to the sleeve between a first position in which the piston is drivingly engaged with the sleeve for urging the sleeve in a first direction along an internal bore of the housing, and a second position in which the piston is drivingly disengaged from the sleeve, the latching mechanism being configured to preventing movement of the sleeve along the internal bore of the housing in a second direction opposite to the first direction, wherein the piston and sleeve are configured such that in the second position of the piston relative to the sleeve, the piston engages the sleeve thereby providing a hard stop for the piston.

The brake actuator may comprise a seal circumscribing the piston head and sealing between the piston head and the internal bore of the housing. The seal may be a T-seal.

The brake actuator may comprise a piston spring arranged between the piston head and the sleeve. The piston spring may circumscribe the piston and extend into a bore formed in the sleeve. The piston spring may be a compression spring.

### BRIEF DESCRIPTION OF THE DRAWINGS

Some exemplary embodiments and features of the present disclosure will now be described by way of example only, and with reference to the following drawings in which:
Figure 1 shows a cross-sectional view of a brake actuator in accordance with the disclosure in a first configuration;
Figure 2 shows an exploded isometric view of the brake actuator of Figure 1;
Figure 3 shows a cross-sectional view of the brake actuator of Figure 1 in a second configuration; and
Figure 4 shows an example dust wiper for use in the actuator of Figure 1.

### DETAILED DESCRIPTION

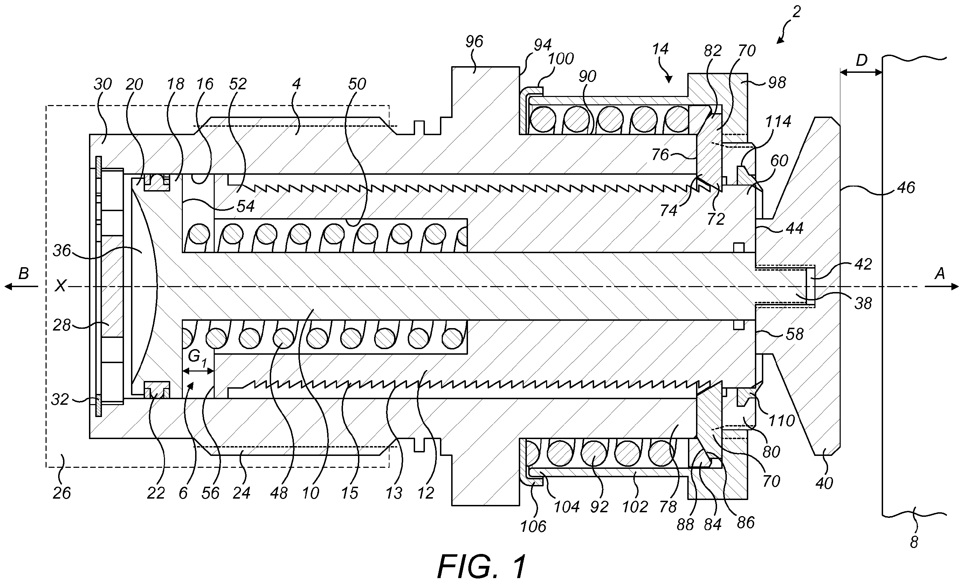

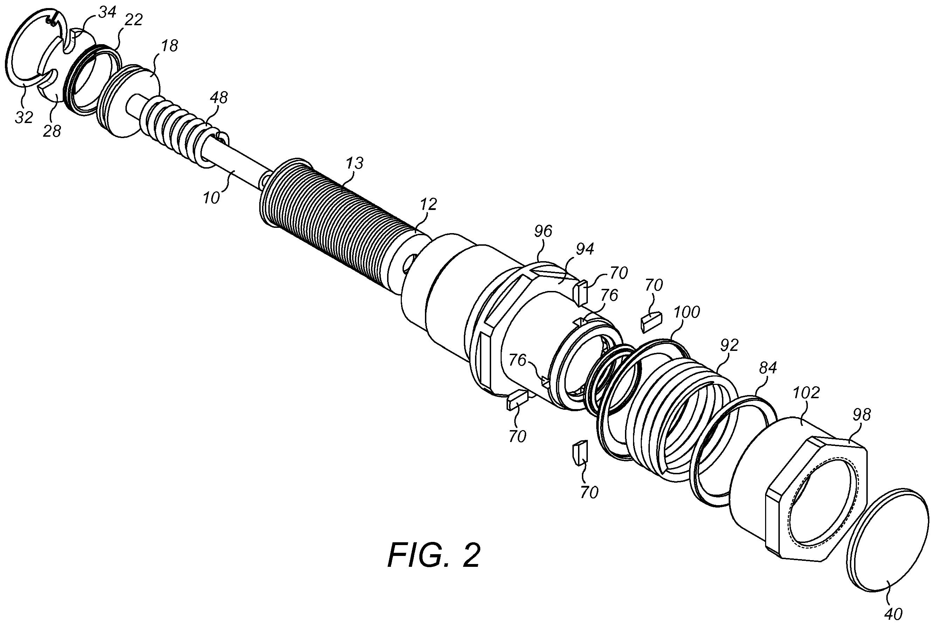

With reference to Figures 1 to 3, a brake actuator 2 according to an embodiment of the present disclosure is illustrated.

The brake actuator 2 comprises a housing 4 which receives a piston assembly 6 having a longitudinal piston axis X and which in use applies a braking force to a brake element 8 such as a brake disc in an aircraft braking system.

The piston assembly 6 comprises a piston 10 and a sleeve 12 having ratchet teeth 13 formed along an external surface 15 of the sleeve 12. The actuator 2 further comprises a latching mechanism 14 for maintaining an axial position of the sleeve 12 in the housing 4.

The piston 10 is slidably mounted in an internal bore 16 of the housing 4. As can be seen, the piston 10 extends axially through the sleeve 12. The piston 10 is also slidably received in the sleeve 12. The piston 10 comprises a piston head 18 at a first end 20 thereof. A sliding seal 22, for example a T-seal 22, may surround the piston head 18 for slidably sealing the piston head 18 against the internal bore 16 of the housing 4. The housing 4 may, as shown, be provided with an external thread 24 for mounting the housing 4 in a hydraulic fluid supply cavity 26 which supplies hydraulic fluid to the piston head 18 to move the piston along the internal bore 16 of the housing 4. An end plate 28 may be secured across an end 30 of the housing 4 by a retaining clip 32, and may define one or more openings 34 for admitting pressurized hydraulic fluid into a cavity 36 in the housing 4 between the end plate 28 and the piston head 18, to apply a braking force to the piston head 18.

A second end 38 of the piston 10 includes a cap 40. The cap 40 may, as shown, comprise a bore 42 into which a portion of the second end 38 of the piston 10 is mounted. The cap 40 may be threadably engaged with the second end 38 of the piston 10, as shown, or retained by any other suitable means. The second end 38 of the piston 10 is operatively engaged with the brake element 8 via the cap 40.

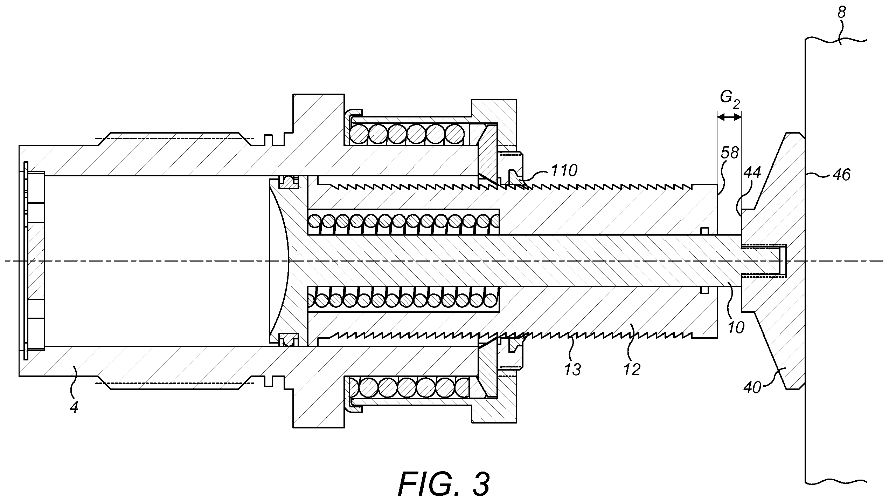

The cap 40 comprises a first end surface 44 and an opposed second end surface 46. The bore 42 may be formed in the first end surface 44 of the cap 40. The second end surface 46 of the cap 40 is configured for transmitting the braking force to the brake element 8, when the pressurized fluid is admitted into the cavity 36 of the housing 4, as shown in Figure 3.

A piston spring 48 is provided to bias the piston 10 in a direction such that the piston head 18 moves away from the sleeve 12. The spring 48 may, as shown, be a compression spring 48. The spring 48 may extend between the piston head 18 and a portion of the sleeve 12, as shown in Figure 1. In the illustrated embodiment, the spring 48 is a coil spring circumscribing the piston 10. The spring 48 is received in a bore 50 formed in a first end 52 of the sleeve 12. When no force is applied to the piston head 18 by the pressurized fluid (i.e., when the system is at rest), the spring 48 maintains a first axial gap G₁ between a rear face 54 of the piston head 18 and an opposed first end surface 56 of the sleeve 12. The spring 48 biases the cap 40 towards a second end surface 58 formed at a second end 60 of the sleeve 12. When no force is applied to the piston head 18 by the pressurized fluid (i.e., at rest), the spring 48 urges the first end surface 44 of the cap 40 against the second end surface 58 of the sleeve 12 to form a hard stop for the cap 40 and thus for the piston 10.

As discussed above, a braking force is applied by admitting pressurised hydraulic fluid into the cavity 36 of the housing 4 to apply an axial force on the piston head 18. The force exerted by the fluid on the piston head 18 urges the piston 10 axially against the biasing force of the spring 48 towards the first end 52 of the sleeve 12. This reduces the first axial gap G₁ between the rear face 54 of the piston head 18 and the first end surface 56 of the sleeve 12. The motion of the piston head 18 is transmitted via the piston 10 to the cap 40, such that the cap 40 is urged away from the sleeve 12 and towards the brake element 8. A second axial gap G₂ is then created between the second end surface 58 of the sleeve 12 and the first end surface 44 of the cap 40, as shown in Figure 3.

If prior to any force being applied to the piston head 18 by the pressurized fluid (i.e., when the system is at rest) the distance D between the second end surface 46 of the cap 40 and the brake element 8 (i.e., the operational travel of the cap 40) is less than the length of the first axial gap G₁, then when the pressurized fluid is admitted into the cavity 36 of the housing 4 to apply a force on the piston head 18, the piston 10 will move in a first direction A so as to urge the second end surface 46 of the cap 40 against the brake element 8 and apply the braking force without the piston head 18 contacting the first end surface 56 of the sleeve 12. When the force from the pressurized fluid is removed, the spring 48 will urge the piston head 18 in an opposing second direction B axially away from the first end 52 of the sleeve 12, and the first end surface 44 of the cap 40 will be urged back against the second end surface 58 of the sleeve 12, returning the piston assembly 6 to its rest position.

In other words, if the distance D between the second end surface 44 of the cap 40 and the brake element 8 is less than or equal to the length of the first axial gap G₁, no force will be transmitted to the sleeve 12 by the pressurized fluid.

However, if prior to any force being applied to the piston head 18 by the pressurized fluid the distance D between the second end surface 46 of the cap 40 and the brake element 8 is greater than the length of the first axial gap G₁ (as may occur when the brake element 8 wears and reduces in thickness), then before the second end surface 46 of the cap 40 reaches the brake element 8, the first axial gap G₁ will reduce to zero and the piston head 18 will move into driving engagement with the first end surface 56 of the sleeve 12, as shown in Figure 3, and will move the sleeve 12 axially in the first direction A towards the brake element 8, until the cap 40 comes into contact with the brake element 8 and applies the braking force. When the force from the pressurized fluid is removed, the spring 48 will urge the piston head 18 back in the opposing second direction B as before, and the first end surface 44 of the cap 40 is urged back against the second end surface 58 of the sleeve 12. However, as will be described further below, the latching mechanism 14 prevents movement of the sleeve 12 in the second direction B such that the sleeve 12 will remain in its new axial position. The piston 10 will therefore not move back to its original position in the housing 4 as shown in Figure 1, but will be held in a new axial position in the housing bore 16.

In other words, if the distance D between the second end surface 46 of the cap 40 and the brake element 8 is greater than the length of the first axial gap G₁, when the pressurized fluid is admitted into the cavity 36 of the housing 4 it will apply a force on the sleeve 12, and the sleeve 12 will be urged towards the brake element 8 and then be retained in its new axial position by the latching mechanism 14, such that the distance D between the second end surface 46 of the cap 40 and the brake element 8 is maintained at less than or equal to the length of the first axial gap G₁ when the force from the pressurized fluid is removed.

The latching mechanism 14 therefore provides an arrangement in which the operational travel of the piston 10 remains less than or equal to the length of the first axial gap G₁. The size of the first axial gap G₁ may therefore be set to provide the desired optimal operational travel of the piston 10. This may improve the effectiveness of the braking system.

Turning now to the latching mechanism 14, this will be described in greater detail with reference to Figures 1 to 3.

The latching mechanism 14 comprises a plurality of latches 70 each having an angled tooth 72 at its radially inner end 74. The tooth 72 is configured to engage with the ratchet teeth 13 of the sleeve 12, such that the sleeve 12 is able to move axially toward the brake element 8, but is not able to move axially away from the brake element 8. In this embodiment there are four latches 70, circumferentially spaced around the housing 4. Fewer or more latches 70 may be provided in various embodiments. The latches 70 may, as shown, be circumferentially equi-spaced around the housing 4.

The latches 70 may, as shown, extend radially through respective openings 76 formed in a wall 78 of the housing 4 at a second end 80 of the housing 4. The openings 76 may have a cross section complementary to that of the latches 70 so as to guide the latches 70 for radial movement. The openings 76 may also support the latches 70 axially. The latches 70 are slidably mounted in the openings 76.

Each latch 70 has a radially outer end 82 which projects radially outwardly of the opening 76. As will be described further below, the projecting radially outer end 82 of the latch 70 is biased radially inwardly into contact with the sleeve 12 by a spring loaded wedge 84.

In the described embodiment, the radially outer end 82 of the latch 70 has an angled surface 86 which is in slidable contact with an angled surface 88 of the wedge 84. Axial movement of the wedge 84 in a direction towards the second end 80 of the housing 4 will act to move the latch 70 radially inwardly. Other forms of engagement may be provided between the wedge 84 and radially outer end 82 of the latch 70 to effect the desired radial movement.

The wedge 84, in this embodiment, is a wedge ring which is slidably received on a radially outer surface 90 of the housing 4. Other forms of wedges 84, for example individual wedges for the respective latches 70 may be provided.

The latching mechanism 14 further comprises a latch spring 92 which biases the wedge 84 into contact with the latches 70 and thus biases the teeth 72 of the latches 70 into contact with the ratchet teeth 13 of the sleeve 12. As illustrated, the latch spring 92 may be a compression spring, for example a coil spring 92 mounted around the radially outer surface 90 of the housing 4. Alternatively, individual latch springs 92 may be provided, each configured to bias a respective latch 70.

The latch spring 92 is located axially between a radially extending shoulder 94 formed on a radially projecting flange 96 of the housing 4 and a retainer 98. The retainer 98 may, as illustrated, be a nut 98 which is threadedly mounted on the second end 80 of the housing 4. A form of retainer 98 other than a nut may be provided in other embodiments. In this embodiment, a cupped, annular spring support 100 receives one end the latch spring 92 and abuts the shoulder 94 of the housing 4. In other embodiments, the spring support 100 may be omitted.

A protective cover 102 extends around the latch spring 92 and between the retaining nut 98 and the spring support 100. The cover 102 assists in preventing the ingress of contaminants into the latching mechanism 14 which might interfere with the operation of the latching mechanism 14.

The cover 102 in this embodiment is formed as an axial extension of the retaining nut 98, which will facilitate assembly of the latching mechanism 14. The end 104 of the cover 102 remote from the nut 98 fits radially within a radially outer lip 106 of the spring support 100 to improve the closure to contaminants of that end of the latching mechanism 14.

The ratchet teeth 13 of the sleeve 12, and the teeth 72 of the latches 70, are angled such that movement of the sleeve 12 in the direction towards the brake element 8 will cause the ratchet teeth 13 to urge the latches 70 radially outwardly away from the sleeve 12 against the biasing force of the latch spring 92. As the latches 70 move radially outwardly, the wedge 84 will move axially away from the second end 80 of the housing 4 against the force of the latch spring 92. However, as the sleeve 12 moves, the latch spring 92 will urge the latches 70 radially inwardly such that the latches 70 will engage between successive ratchet teeth 13 so as to latch the sleeve 12 against movement in the opposite direction. Clearly, the spring force of the latching spring 92 should be greater than that of the spring 48 so that the latches 70 do not move radially outwardly during the initial compression of the spring 48, but only during application of an appropriate hydraulic force to the piston 10.

To further provide protection from contaminants, a wiper 110 may be mounted in the second end 80 of the housing 4 for engagement with the sleeve 12. The wiper 110 seals against the sleeve 12 to prevent ingress of contaminants and may be made from a resilient material such as rubber, polyurethane or PTFE.

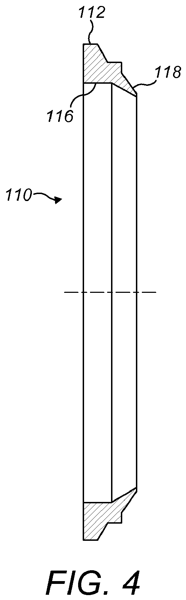

The wiper 110 may, as illustrated, be a ring circumscribing the sleeve 12. The wiper 110, which is shown in more detail in Figure 4, may comprise a mounting portion 112 for mounting the wiper 110 in a recess 114 or other location at the second end 80 of the housing. In some embodiments, a radially inner surface 116 of the mounting portion 112 may engage the sleeve 12 to provide some sealing. In the embodiment illustrated, however, the wiper 110 further comprises a radially inwardly extending lip 118. The lip 118 is dimensioned such that it will engage in the spaces between the ratchet teeth 13 of the sleeve 12. As the sleeve 12 moves outwardly from the housing 4, the lip 118 will be resiliently deflected outwardly by the ratchet teeth 13 but then resile back into the space between adjacent ratchet teeth 13 and conform to the shape of the space to provide an improved seal. In this way, any gap between the sleeve 12 and the housing bore 16 is minimised.

The disclosed arrangement provides a brake actuator which provides compensation for wear of brake elements by means of a wear compensation sleeve 12 which moves axially relative to the housing 4 in one direction and which provides a hard stop for the actuator piston 10. Movement of the sleeve 12 in the opposite direction is prevented by a latching mechanism 14.

The latching mechanism 14 is arranged substantially externally of the housing 4, which may improve accessibility and assembly. Moreover, the latches 70 are advantageously configured to move only radially, which may improve engagement with the ratchet teeth 13 of the sleeve 12.

Moreover, separately from this, the sleeve 12 provides a fixed stopping point for the piston 10 to return to when no braking force is applied, such that the position of the cap 40 relative to the brake element 8 at rest will be consistent, leading to more consistent braking performance. By providing a hard stop, movement of the piston 10 due to back pressure or vibration may be prevented.

In addition, the provision of a cover 102 and wiper 110 provides good protection against ingress of contaminants such as dust into the latching mechanism 14, which improves the reliability of the actuator 2.

It will be understood that the actuator 2 may have particular application in aircraft braking systems. However, the disclosure is not limited to such applications and may find use in any actuation system which may need to compensate for wear.

Although the figures and the accompanying description describe particular embodiments and examples, it is to be understood that the scope of this disclosure is not to be limited to such specific embodiments, and is, instead, to be determined by the following claims.

## Claims

1. A brake actuator (2) for an aircraft braking system, the brake actuator (2) comprising:
a housing (4) having an internal bore (16);
a sleeve (12) mounted for axial movement within the bore (16) of the housing (4), the sleeve (12) having a plurality of ratchet teeth (13) on an external surface (15) thereof;
a latching mechanism (14) comprising at least one latch (70) mounted for radial movement for engagement with the ratchet teeth (13) of the sleeve (12), the latching mechanism (14) further comprising a latch spring (92) mounted externally of the internal bore (16) for biasing the at least one latch (70) radially inwardly to engage with the ratchet teeth (13) of the sleeve (12); and
a hydraulic brake piston (10) slidably mounted within the internal bore (16) of the housing (4) and extending axially through the sleeve (12), the piston (10) having a piston head (18) at a first end (20) thereof, and a second opposite end (38) for operative engagement with a brake element (100), the piston (10) being mounted so as to be movable axially relative to the sleeve (12) between a first position in which the piston (10) is drivingly engaged with the sleeve (12) for urging the sleeve (12) in a first direction (A) along the internal bore (16) of the housing (4), and a second position in which the piston (10) is drivingly disengaged from the sleeve (12), the latching mechanism (14) preventing movement of the sleeve (12) along the internal bore (16) of the housing (4) in a second direction (B) opposite to the first direction (A).

2. The brake actuator (2) of claim 1, wherein the latching mechanism (14) comprises a wedge (84), the latch spring (92) being configured to bias the wedge (84) into contact with the at least one latch (70) so as to bias the latch (70) radially inwardly.

3. The brake actuator (2) of claim 2, wherein the at least one latch (70) comprises an angled surface (86) at a radially outer end (82) thereof for engaging an angled surface (88) of the wedge (84), the wedge (84) being arranged axially between the latch spring (92) and the at least one latch (70).

4. The brake actuator (2) of claim 2 or 3, wherein the wedge (84) is a wedge ring which circumscribes the housing (4).

5. The brake actuator (2) of claim 2, 3 or 4, wherein the at least one latch (70) is slidably received in an opening (76) through a wall (78) of the housing (4), the opening (76) being configured to guide the at least one latch (70) radially, and the radially outer end (82) of the at least one latch (70) projecting radially outwardly of the opening (76) for engagement with the wedge (84).

6. The brake actuator (2) of any preceding claim, wherein the latch spring (92) is a compression spring (92) received on a radially outer surface (90) of the housing (4).

7. The brake actuator (2) of any preceding claim, wherein the latch spring (92) is retained between a radially extending external shoulder (94) of the housing (4) and a retainer (98), the retainer (98) optionally being a nut (98).

8. The brake actuator (2) of any preceding claim, further comprising a cover (102) extending axially over the latching mechanism (14).

9. The brake actuator (2) of claims 7 and 8, wherein the cover (102) is attached to the retainer (98), the cover (102) optionally extending to and optionally overlapping a latch spring support (100) arranged between the latch spring (92) and the radially extending shoulder (94) of the housing (4).

10. The brake actuator (2) of any preceding claim, comprising a plurality of latches (70), optionally circumferentially equi-spaced around the housing (4).

11. The brake actuator (2) of any preceding claim, further comprising an annular wiper (110) mounted at one end of the internal bore (16) of the housing (4) for engaging the external surface (15) of the sleeve (12) and optionally comprising a resilient lip (118) for engagement with the ratchet teeth (13) of the sleeve (12) for preventing ingress of contaminants into the internal bore (16) of the housing (4).

12. The brake actuator (2) of any preceding claim, wherein the piston (10) and sleeve (12) are configured such that in the second position of the piston (10) relative to the sleeve (12), the piston (10) engages the sleeve (12) thereby providing a hard stop for the piston (10).

13. A brake actuator (2) comprising:
a housing (4) having an internal bore (16);
a sleeve (12) slidably received within the housing (4), the sleeve (12) having external ratchet teeth (13) for engaging with a latching mechanism (14); and
a hydraulic brake piston (10) slidably mounted within the internal bore (16) of the housing (4) and extending axially through the sleeve (12), the piston (10) having a piston head (18) at a first end (20) thereof, and a second opposite end (38) for operative engagement with a brake element (8), the piston (10) being mounted so as to be movable axially relative to the sleeve (12) between a first position in which the piston (10) is drivingly engaged with the sleeve (12) for urging the sleeve (12) in a first direction (A) along an internal bore (16) of the housing (4), and a second position in which the piston (10) is drivingly disengaged from the sleeve (12), the latching mechanism (14) being configured to preventing movement of the sleeve (12) along the internal bore (16) of the housing (4) in a second direction (B) opposite to the first direction (A); wherein:
the piston (10) and sleeve (12) are configured such that in the second position of the piston (10) relative to the sleeve (12), the piston (10) engages the sleeve (12) thereby providing a hard stop for the piston (10).

14. The brake actuator (2) of any preceding claim, further comprising a seal (22), optionally a T-seal, circumscribing the piston head (18) and sealing between the piston head (18) and the internal bore (16) of the housing (4).

15. The brake actuator (2) of any preceding claim, further comprising a piston spring (48), for example a compression spring, arranged between the piston head (18) and the sleeve (12), the piston spring (48) optionally circumscribing the piston (10) and extending into a bore (50) formed in the sleeve (12).
